Europäisches Patentamt

European Patent Office

Office européen des brevets

(19)

(11) Veröffentlichungsnummer: **0 124 074**
**B1**

(12) # EUROPÄISCHE PATENTSCHRIFT

(45) Veröffentlichungstag der Patentschrift: 19.07.89

(21) Anmeldenummer: 84104632.9

(22) Anmeldetag: 25.04.84

(51) Int. Cl.⁴: **A 21 D   8/04**

---

(54) **Verfahren zum Herstellen von Weizenbrot unter Verwendung von acetatangereichertem Sauerteig.**

---

(30) Priorität: 28.04.83 DE 3315434

(43) Veröffentlichungstag der Anmeldung: 07.11.84 Patentblatt 84/45

(45) Bekanntmachung des Hinweises auf die Patenterteilung: 19.07.89 Patentblatt 89/29

(84) Benannte Vertragsstaaten:
AT CH FR LI NL SE

(56) Entgegenhaltungen:
BE–A–   376 407
BE–A–   530 216
DE–C–   658 879
FR–A– 1 555 750
BAKERS DIGEST, Band 57, Nr. 4, Juli/August 1983, Seiten 41-45, Chicago, Illinois, US; K. LORENZ: "Sourdough processes - Methodology and biochemistry"

(73) Patentinhaber: Hammel, Anton Dieter, Dr.
Wolfsgraben 11
D-3440 Eschwege (DE)

(72) Erfinder: Hammel, Anton Dieter, Dr.
Wolfsgraben 11
D-3440 Eschwege (DE)

(74) Vertreter: Goddar, Heinz J., Dr. et al
FORRESTER & BOEHMERT Widenmayerstrasse 4/I
D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen von Weizenbrot oder Weizenmischbrot unter Verwendung von acetatangereichertem Sauerteig, bei dem durch Stehenlassen für 1 bis 24 Stunden bei einer Temperatur von ca. 25 °C ein Ansatz aus Sauerteig-Anstellgut und den übrigen, einen Gehalt an Weizenmehl und/oder Weizenschrot aufweisenden Teigbestandteilen einem Säuerungsprozeß unterworfen wird.

Für Brote, die einen Anteil von Roggenmahlerzeugnissen enthalten, muß der zur Brotherstellung dienende Teig gesäuert werden. Hierfür ist es einmal möglich, bei direkter Führung mit Teigsäuerungsmitteln zu arbeiten, wodurch die Wasseraufnahme im Teig erhöht wird, während bei der indirekten Führung Sauerteig verwendet wird, welcher zusätzlich die Enzymatik im Teig erhöht. Es sind Sauerteigführungen bekannt (vgl. Brot & Backwaren 4/83, Seiten 84 ff.), bei denen durch das beschriebene Stehenlassen bei Raumtemperatur für einen Zeitraum von bis zu 24 Stunden ein Säuerungsvorgang stattfindet. Es hat sich aber herausgestellt, daß die hierdurch erzielte Säuerung zur Konservierung von Weizenbrot noch nicht ausreicht. Läßt man die Säuerung jedoch für einen längeren Zeitraum ablaufen, so schmeckt das gebackene Brot stark sauer. Insbesondere dann, wenn Teige mit einem verhältnismäßig großen Anteil von Weizen verwendet werden, stört der zu saure Geschmack sehr.

Der Erfindung liegt die Aufgabe zugrunde, ohne Zusatz von Natriumacetat oder Teigsäuerungsmitteln die Haltbarkeit und die geschmacklichen Eigenschaften Brot, z. B. Weizenbrot oder Weizen-Roggen-Mischbrot, zu verbessern, wobei das Brot insbesondere gegen Fadenziehen resistent gemacht werden soll.

Erfindungsgemäß wird diese Aufgabe bei dem Verfahren der eingangs genannten Art dadurch gelöst, daß im Anschluß an den ersten Säuerungsprozeß eine Nachsäuerung durch Stehenlassen bei einer Temperatur von 3 bis 10 °C über einen Zeitraum von mindestens 96 Stunden erfolgt.

Die Unteransprüche geben vorteilhafte Ausgestaltungen des erfindungsgemäß vorgeschlagenen Verfahrens an.

Grundlage des erfindungsgemäßen Verfahrens ist die Erkenntnis, daß Weizenbrews, die einer spontanen Säuerung unterliegen, nach einem Reifeprozeß weniger stark sauer schmecken, wobei ein Pufferungsprozeß abläuft, bei dem ein Teil der vorhandenen freien organischen Säure an pufferungsfähige Substanzen des Weizenmehls und/oder Schrotes oder dergleichen angelagert wird. Überraschenderweise hat sich gezeigt, daß der in einer ersten Stufe gebildete Sauerteig bei einer Kühlung auf eine Temperatur von 3 bis 10 °C, insbesondere etwa 6 °C, in der Weise weitersäuert, daß der pH-Wert nach etwa 4 bis 5 Tagen nicht mehr zunimmt. Der Säuregrad hingegen steigt kontinuierlich bis zum 6., 7. Tag weiter an, daß heißt also, die aktuelle Säure nimmt nicht mehr zu, sondern lediglich noch die potentielle Säure : Mit anderen Worten, trotz vorhandener hoher Essigsäureanteile, wie sie zur Konservierung des Weizenbrotes vorteilhaft sind, schmeckt der Sauerteig bzw. das daraus gebackene Brot nicht sauer. Durch geeignete Auswahl des erfindungsgemäß vorgesehenen Pufferungssystems, insbesondere bei sehr hohen Weizenanteilen, läßt sich eine Acetatanreicherung um etwa 50 % und mehr erzielen. Schon bei verhältnismäßig geringen Weizenmehl- und/oder Schrotanteilen beträgt die Anreicherung etwa 20 %.

Durch das erfindungsgemäße Verfahren wird der Essigsäuregehalt im Brotteig bei Verwendung von Sauerteigkulturen auf Roggenbasis in vorteilhafter Weise optimiert. Die relativ feste Teigführung mit langen Lagerzeiten sowie die beschriebene und beanspruchte zweistufige Temperaturführung bei Raumtemperatur sowie bei etwa 3 bis 10 °C oberhalb des Gefrierpunktes gewährleistet eine optimale Steigerung des potentiellen Säuregehaltes. Das Brot weist also, wenn es nach dem erfindungsgemäßen Verfahren hergestellt wird, eine höhere Essigsäurekonzentration auf, als sie geschmacklich in Brot wahrzunehmen ist, wodurch das Weizenbrot vor der Brotkrankheit Fadenziehen in neuartiger und vorteilhafter Weise ausreichend geschützt wird.

Beispiel

40 kg Weizenkleie und 210 kg Weizenmehl sowie 25 kg Anstellgut werden mit 200 l Wasser zu einem Teig geknetet, der alsdann einem Säuerungsprozeß bei 25 °C durch Stehenlassen für 18 Stunden unterworfen wird. Anschließend erfolgt eine Absenkung der Temperatur auf 6 °C, woraufhin man den Sauerteig weitere 150 Stunden stehen läßt. Hieraus wird ein Brot gebacken, welches nicht sauer schmeckt, obwohl die Essigsäurekonzentration etwa 50 % höher ist als bei Brot, welches aus einem Sauerteig gebacken wird, der keiner Tieftemperatur-Nachsäuerung unterworfen wurde.

## Patentansprüche

1. Verfahren zum Herstellen von Weizenbrot oder Weizenmischbrot unter Verwendung von acetatangereichertem Sauerteig, bei dem durch Stehenlassen für 1 bis 24 Stunden bei einer Temperatur von ca. 25 °C ein Ansatz aus Sauerteig-Anstellgut und den übrigen, einen Gehalt an Weizenmehl und/oder Weizenschrot aufweisenden Teigbestandteilen einem Säuerungsprozeß unterworfen wird, dadurch gekennzeichnet, daß im Anschluß an den ersten Säuerungsprozeß eine Nachsäuerung durch Stehenlassen bei einer Temperatur von 3 bis 10 °C über einen Zeitraum von mindestens 96 Stunden erfolgt.

2. Verfahren nach Anspruch 1, dadurch gekennzeichnet, daß die Nachsäuerung über einen Zeitraum von mindestens 120 Stunden erfolgt.

3. Verfahren nach Anspruch 2, dadurch gekennzeichnet, daß die Nachsäuerung über einen Zeitraum von mindestens 150 Stunden erfolgt.

4. Verfahren nach einem der vorangehenden Ansprüche, dadurch gekennzeichnet, daß die Nachsäuerung bei einer Temperatur von ca. 6 °C erfolgt.

5. Verfahren nach einem der vorangehenden Ansprüche, dadurch gekennzeichnet, daß der Ansatz aus einem Gemisch von Roggenmehl und/oder Roggenschrot sowie bis zu 90 Gew.-% Weizenmehl und/oder Weizenschrot besteht.

6. Verfahren nach einem der vorangehenden Ansprüche, dadurch gekennzeichnet, daß das Sauerteig-Anstellgut bis zu 90 Gew.-% stärkehaltige Pflanzenmehle, stärkehaltige Pflanzenfruchtmehle oder dergleichen enthält.

7. Verfahren nach einem der vorangehenden Ansprüche, dadurch gekennzeichnet, daß das Sauerteig-Anstellgut bis zu 90 Gew.-% Gersten-, Hafer-, Hirse-, entbitterte (s) Soja-, Algen-, Johannisbrotkern- und/oder Leguminosen-Mehl und/oder Schrot aufweist.

8. Verfahren nach einem der vorangehenden Ansprüche, gekennzeichnet durch eine relativ feste Teigführung mit einer Teigausbeute von 150 bis 180.

9. Verfahren nach einem der vorangehenden Ansprüche, dadurch gekennzeichnet, daß das Sauerteig-Anstellgut in einem Anteil von ca. 10 Gew.-% des gesamten Ansatzes verwendet wird.

## Claims

1. A method of making wheat bread or mixed wheat bread using acetate-enriched leaven, in which a batch of initial leaven mixture and the other dough constituents containing wheat flour and/or coarse ground wheat is subjected to a leavening process by being left to stand for 1 to 24 hours at a temperature of about 25 °C, charactertsed in that the first leavening process is followed by a post-leavening by being left to stand at a temperature of 3 to 10 °C for a period of at least 96 hours.

2. A method according to claim 1, characterised in that the post-leavening takes place over a period of at least 120 hours.

3. A method according to claim 2, characterised in that the post-leavening takes place over a period of at least 150 hours.

4. A method according to any one of the preceding claims, characterised in that the post-leavening takes place at a temperature of about 6 °C.

5. A method according to any one of the preceding claims, characterised in that the batch consists of a mixture of rye flour and/or coarse ground rye and up to 90 % by weight wheat flour and/or coarse ground wheat.

6. A method according to any one of the preceding claims, characterised in that the initial leaven mixture contains up to 90 % by weight of starch-containing vegetable flour, starch-containing vegetable fruit flour or the like.

7. A method according to any one of the preceding claims, characterised in that the initial leaven mixture contains up to 90 % by weight of barley, oats, millet, debittered soya, algae, carob beans and/or legumes in flour and/or coarse ground form.

8. A method according to any one of the preceding claims, characterised by a relatively solid dough management with a dough yield of 150 to 180.

9. A method according to any one of the preceding claims, characterised in that the initial leaven mixture is used in a proportion of about 10 % by weight of the total batch.

## Revendications

1. Procédé de fabrication de pain de froment ou de pain bis de froment à l'aide de levain enrichi en acétate, dans lequel on soumet une composition initiale constituée d'un ajout initial de levain et des autres constituants de la pâte présentant une portion de farine de froment et/ou de grains de froment, à un processus d'acidification en la laissant reposer pendant 1 à 24 heures, à une température d'environ 25 °C, caractérisé en ce qu'à la suite du premier processus d'acidification a lieu une acidification postérieure en la laissant reposer à une température de 3 à 10 °C pendant une période de temps d'au moins 96 heures.

2. Procédé selon la revendication 1, caractérisé en ce que l'acidification postérieure a lieu pendant une période de temps d'au moins 120 heures.

. 3. Procédé selon la revendication 2, caractérisé en ce que l'acidification postérieure a lieu pendant une période de temps d'au moins 150 heures.

4. Procédé selon l'une des revendications précédentes, caractérisé en ce que l'acidification postérieure a lieu à une température d'environ 6 °C.

5. Procédé selon l'une des revendications précédentes, caractérisé en ce que la préparation est composée d'un mélange de farine de seigle et/ou de grains de seigle ainsi que d'une quantité pouvant aller jusqu'à 90 % en poids de farine de froment et/ou de grains de froment.

6. Procédé selon l'une des revendications précédentes, caractérisé en ce que le levain obtenu comprend jusqu'à 90 % en poids de fécule d'origine végétale, de fécule provenant des fruits ou analogues.

7. Procédé selon l'une des revendications précédentes, caractérisé en ce que le levain obtenu présente jusqu'à 90 % en poids de farine et/ou de grains d'orge, d'avoine, de mil, de soja dont l'amertume a été enlevée, d'algues, de caroube et/ou de légumineux.

8. Procédé selon l'une des revendications précédentes, caractérisé par un travail de la pâte relativement constant avec un rendement en pâte de 150 à 180.

9. Procédé selon l'une des revendications précédentes, caractérisé en ce que l'ajout initial en levain est utilisé selon une proportion d'environ 10 % en poids de composition initiale totale.